# EUROPEAN PATENT APPLICATION

(11) **EP 2 166 605 A1**
(43) Date of publication of application: **24.03.2010**
(21) Application number: 08710372.7
(22) Date of filing: 13.02.2008
(51) Int. Cl.: H01M 6/08, H01M 4/06, H01M 4/42

(54) **MERCURY-FREE ALKALINE DRY BATTERY**

(30) Priority: 18.05.2007 JP 2007132933
(71) Applicant: Panasonic Corporation, Kadoma-shi Osaka 571-8501 (JP)
(72) Inventor: Fumio Kato c/o Panasonic Corporation IPROC, Osaka 540-6207 (JP); Jun Nunome c/o Panasonic Corporation IPROC, Osaka 540-6207 (JP); Harunari Shimamura c/o Panasonic Corporation IPROC, Osaka 540-6207 (JP)
(74) Representative: Grünecker, Kinkeldey, Stockmair & Schwanhäusser Anwaltssozietät
(86) International application number: PCT/JP2008/000218
(87) International publication number: WO 2008/142818

(57) **Abstract**

A mercury-free alkaline battery which can sufficiently suppress generation due to zinc corrosion and Fe contamination, and can exhibit a small amount of a voltage drop after pulse discharge in a low-temperature atmosphere, is provided.

The mercury-free alkaline battery includes a positive electrode material mixture pellet 3 and a gelled negative electrode 6. The gelled negative electrode 6 is formed by mixing and dispersing zinc alloy particles, as a negative electrode active material, in a gelled alkaline electrolyte (i.e., a dispersion medium). An anionic surfactant and a quaternary ammonium salt cationic surfactant are added to the negative electrode 6, thereby suppressing both gas generation in the negative electrode and a voltage drop after pulse discharge at low temperatures.

## Description

### TECHNICAL FIELD

The present disclosure relates to mercury-free alkaline batteries.

### BACKGROUND ART

Alkaline-manganese batteries including manganese dioxide for positive electrodes, zinc for negative electrodes, and alkaline solutions for electrolytes, are versatile, and can be manufactured at low cost. For this reason, the alkaline-manganese batteries are widely used as power supplies for various devices. Further, to cope with recent digitization of the devices, alkaline batteries (e.g., nickel-based batteries) exhibiting enhanced power characteristics by adding nickel oxyhydroxide to the positive electrodes are rapidly becoming widespread.

In an alkaline battery, irregularly shaped zinc particles formed with, for example, a gas atomizing method are used as a negative electrode active material. The zinc particles readily corrode in an alkaline electrolyte to generate hydrogen gas, thereby increasing the internal pressure of the battery and leakage. Accordingly, the reliability of the alkaline battery with respect to leakage resistance is greatly enhanced by suppressing corrosion of zinc in the alkaline electrolyte.

In the past, an anti-corrosion technique in which mercury was added to the negative electrode to form amalgam in the surface of zinc particles to increase the overvoltage for hydrogen production was employed. However, environmental concerns have led to a change to mercury-free alkaline batteries in about 1980 to 1990. A core technology that enabled a mercury-free structure is a technique of using corrosion-resistant zinc alloy particles containing small amount of, for example, indium, aluminium, and/or bismuth (see, for example, Patent Document 1). Such zinc alloy particles are still widely used now. In addition, a technique of using an anionic surfactant as an anti-corrosion agent is also disclosed (see, for example, Patent Documents 2 and 3).

On the other hand, during fabrication, an alkaline battery is likely to be contaminated with a trace amount of Fe as an impurity entering from fabrication apparatus. However, when Fe is mixed into an electrolyte in a mercury-free negative electrode, Fe serves as a hydrogen electrode because of a low hydrogenation voltage of Fe, thereby promoting generation of hydrogen gas. In a battery in which zinc is formed into amalgam with mercury, such promotion of hydrogen generation caused by Fe is suppressed, and thus no problems arise. However, this promotion of hydrogen generation poses problems to recent batteries having mercury-free structures.

Patent Document 4 discloses a technique of adding Bi₂O₃ to a negative electrode in order to suppress hydrogen gas generation due to contamination with an impurity as described above. Patent Document 5 discloses a technique of using, as a negative electrode active material, a zinc alloy containing In, Bi, and Al, and adding tetrabutylammonium hydroxide to a negative electrode in order to reduce the possibility of gas generation caused by an impurity.

Patent Document 6 discloses a technique of using fine particles of a zinc alloy.

### CITATION LIST

### PATENT DOCUMENT

PATENT DOCUMENT 1: Japanese Examined Patent Publication No. 3-71737
PATENT DOCUMENT 2: Japanese Patent Publication No. 63-248063
PATENT DOCUMENT 3: Japanese Patent Publication No. 63-248064
PATENT DOCUMENT 4: Japanese Patent Publication No. 6-84521
PATENT DOCUMENT 5: Japanese Patent Publication No. 6-223828
PATENT DOCUMENT 6: United States Patent No. 6,472,103

### SUMMARY OF THE INVENTION

### TECHNICAL PROBLEM

With recent widespread use of digital cameras, batteries exhibiting a small amount of voltage drop even after pulse discharge have been demanded. However, although the mercury-free alkaline batteries disclosed in the above-listed patent documents advantageously suppress generation of hydrogen gas, these batteries have the problem of a large amount of voltage drop due to pulse discharge, especially a large amount of voltage drop in a low-temperature atmosphere. In addition, even when fine particles of Zn shown in Patent Document 6 were applied to these mercury-free alkaline batteries, the above problem was not solved.

It is therefore an object of the present invention to provide a mercury-free alkaline battery in which zinc corrosion and hydrogen generation caused by contamination with Fe are sufficiently suppressed and which exhibits a small amount of voltage drop due to pulse discharge in a low-temperature atmosphere.

### SOLUTION TO THE PROBLEM

To solve the foregoing problems, an example mercury-free alkaline battery according to the present invention includes: a positive electrode; a negative electrode; and a separator. In this battery, the negative electrode includes a zinc alloy, as a negative electrode active material, and a gelled alkaline electrolyte, as dispersion medium, and also includes an anionic surfactant and a quaternary ammonium salt cationic surfactant.

With this configuration, the anionic surfactant and the quaternary ammonium salt cationic surfactant provide synergistic effects to suppress both hydrogen gas generation and a voltage drop after pulse discharge in a low-temperature atmosphere.

The anionic surfactant may be made of at least one material selected from the group consisting of ROPO₃X₂, ROSO₃X, and RSO₃X (where R is an alkyl group having a carbon number from 5 to 18, both inclusive, and X is at least one material selected from the group consisting of H, Na, and K), and an amount of the anionic surfactant contained in the negative electrode may be in the range from 0.01 wt% to 0.5 wt%, both inclusive, of the zinc alloy.

The quaternary ammonium salt cationic surfactant may be made of at least one material selected from the group consisting of tetraethylammonium salt, tetrapropyl ammonium salt, and triethylmethylammonium salt, and an amount of the quaternary ammonium salt cationic surfactant contained in the negative electrode may be in the range from 0.002 wt% to 0.02 wt%, both inclusive, of the zinc alloy.

The gelled alkaline electrolyte in the negative electrode may further include an indium compound in which an amount of indium is in the range from 0.003 wt% to 0.033 wt%, both inclusive, of the zinc alloy. Here, the phrase of "the gelled alkaline electrolyte in the negative electrode may further include" means that in addition to indium contained in the zinc alloy, an indium compound may be added to the negative electrode.

The mercury-free alkaline battery may be an AA battery, an amount ΔV of a voltage drop obtained by subtracting, from an open circuit voltage, a closed circuit voltage after pulse discharge performed with 1.6 A for 0.1 second in a 0°C atmosphere, may be less than 300 mV, and in an atmosphere at 45°C, a rate of gas generation from the negative electrode is less than 30 µL/day, and is less than 80 µL/day when 0.08 mg of iron micro fiber is mixed in the negative electrode. Here, the designation "AA" refers to the size of a battery represented as R6 in International Electrotechnical Commission (IEC) standards. According to the standards, an AA alkaline battery is represented as "LR6." The iron micro fiber in an amount of 0.08 mg does not need to be precisely 0.08 mg, and may be in the range of ±40%.

### ADVANTAGES OF THE INVENTION

The mercury-free alkaline battery of the present invention includes an anionic surfactant and a quaternary ammonium salt cationic surfactant. Accordingly, these surfactants provide synergistic effects to suppress both hydrogen gas generation and a voltage drop after pulse discharge in a low-temperature atmosphere.

### BRIEF DESCRIPTION OF THE DRAWINGS

[FIG. 1] FIG. 1 is a front view of a partial cross section of a mercury-free alkaline battery according to an embodiment of the present invention.
[FIG. 2] FIG. 2 is a schematic view of a device used for measuring the rate of gas generation from a negative electrode.

### DESCRIPTION OF REFERENCE CHARACTERS

- 1: positive electrode case
- 2: graphite-coated film
- 3: positive electrode material mixture pellet
- 4: separator
- 5: insulating cap
- 6: gelled negative electrode
- 7: resin sealing plate
- 8: bottom plate
- 9: insulating washer
- 10: negative electrode current collector
- 11: external label
- 21: test tube
- 22: battery
- 23: liquid paraffin
- 24: silicone rubber plug
- 25: constant-temperature bath
- 26: pipet

### DESCRIPTION OF EMBODIMENTS

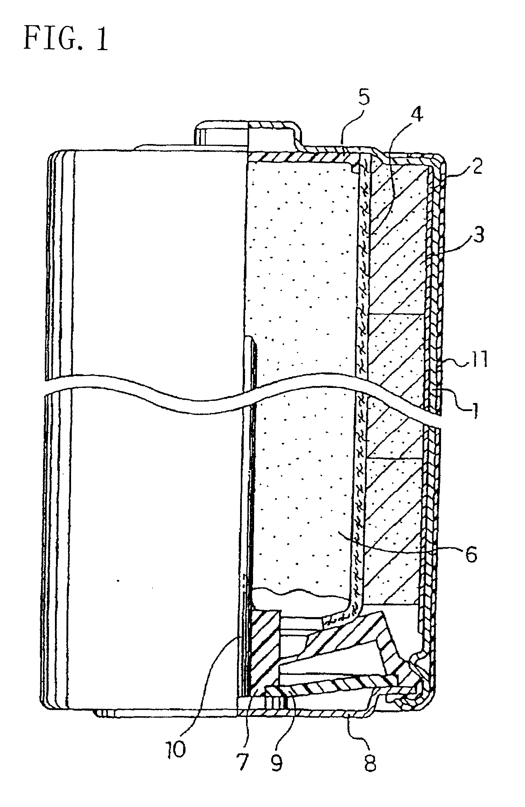

A mercury-free alkaline battery according to an embodiment of the present invention will be described hereinafter. As illustrated in FIG. 1, the mercury-free alkaline battery includes a positive electrode material mixture pellet 3 and a gelled negative electrode 6. The positive electrode material mixture pellet 3 and the gelled negative electrode 6 are separated from each other with a separator 4. A positive electrode case 1 is made of a nickel-plated steel plate. A graphite-coated film 2 is provided in this positive electrode case 1.

The mercury-free alkaline battery illustrated in FIG. 1 can be fabricated in the following manner. First, a plurality of hollow cylindrical positive electrode material mixture pellets 3 containing a positive electrode active material such as manganese dioxide are inserted in the positive electrode case 1. Then, pressure is applied to the pellets 3 such that the pellets 3 are brought into close contact with the inner surface of the positive electrode case 1.

Next, a cylindrically wound separator 4 and an insulating cap 5 are inserted into the positive electrode material mixture pellets 3, and then an electrolyte is poured therein in order to moisten the separator 4 and the positive electrode material mixture pellets 3.

After the pouring, the inside of the separator 4 is filled with a gelled negative electrode 6. This gelled negative electrode 6 is formed beforehand by mixing and dispersing zinc alloy particles, as a negative electrode active material, in a gelled alkaline electrolyte (i.e., a dispersion medium). An anionic surfactant, a quaternary ammonium salt cationic surfactant, and if necessary, an indium compound, are added to the alkaline electrolyte in the gelled negative electrode.

Then, a negative electrode current collector 10 formed by integrating a resin sealing plate 7, a bottom plate 8 also serving as a negative electrode terminal, and an insulating washer 9 is inserted in the gelled negative electrode 6. Thereafter, the edge of an opening of the positive electrode case 1 is crimped to the periphery of the bottom plate 8 with an end of the sealing plate 7 interposed therebetween, thereby bringing the opening edge of the positive electrode case 1 into close contact with the periphery of the bottom plate 8.

Lastly, the outer surface of the positive electrode case 1 is coated with an external label 11. In this manner, the mercury-free alkaline battery of this embodiment can be obtained.

Examples of a study in which various materials are added to the negative electrode in the above-described mercury-free alkaline battery will now be described. It should be noted that the following examples are merely examples of the present invention, and do not limit the present invention.

### <Example 1>

The gelled negative electrode 6 was formed in the following manner.

First, zinc alloy particles containing 0.003 wt% of Al, 0.010 wt% of Bi, and 0.020 wt% of In were formed with a gas atomizing method. The zinc alloy particles were classified with a screen, and were adjusted in such a manner that the zinc alloy particles had a particle size ranging from 35 to 300 meshes, that the percentage of zinc alloy particles having a particle diameter of 200 meshes (i.e., 75 µm) or less was 25 %, and that the average particle diameter (D₅₀) was 180 µm. The particles thus obtained (i.e., sample zinc alloy particles) were used as a negative electrode active material for batteries of Examples 1 to 6.

Next, as a gelled alkaline electrolyte of a dispersion medium, 54 weight parts of 35 wt% of a potassium hydroxide aqueous solution (containing 2 wt% of ZnO), 0.4 weight part of cross-linked polyacrylic acid, and 0.7 weight part of cross-linked sodium polyacrylate were added to, and mixed with, 100 weight parts of the sample zinc alloy particles. Further, 0.03 weight part of indium hydroxide (i.e., 0.0197 weight part as metal indium), n-octyl potassium phosphate (C₈H₁₇OPO₃K₂) (where the amount of the added substance is shown in Table 1) as an anionic surfactant, tetraethylammonium hydroxide ((C₂H₅)₄NOH) (where the amount of the added substance is shown in Table 1) as a quaternary ammonium salt cationic surfactant were added to, and mixed with, the sample zinc alloy particles, thereby forming a mercury-free negative electrode.

**[Table 1]**

| No. | Anionic Surfactant (weight part) | Cationic Surfactant (weight part) | (a) [mV] | (b) [µL/day] | (c) [µL/day] |
|---|---|---|---|---|---|
| 1 | 0.05 | 0.005 | 278 A | 14 A | 40 A |
| 2 | 0.05 | - | 304 C | 22 B | 125 C |
| 3 | - | 0.005 | 393 C | 35 C | 45 A |
| 4 | - | - | 280 A | 65 C | 130 C |

Subsequently, an AA mercury-free alkaline battery was fabricated.

A positive electrode was formed in the following manner. An electrolytic manganese dioxide and graphite were mixed at a weight ratio of 94:6 to form mixture powder. To 100 weight parts of this mixture powder, 1 (one) weight part of an electrolyte (i.e., 36 wt% of a potassium hydroxide aqueous solution containing 2 wt% of ZnO) was added. Then, the resultant mixture was uniformly stirred and mixed with a mixer, and was sized to have a uniform grain size. The obtained grain substance was press-formed into a positive electrode material mixture pellet with a hollow cylindrical mold. In the foregoing process, HH-TF produced by TOSOH CORPORATION was used as electrolytic manganese dioxide, and SP-20 produced by Nippon Graphite Industries, ltd. was used as graphite.

The resultant positive electrode material mixture pellet was inserted in the positive electrode case to cover the inner wall of the positive electrode case. Thereafter, a separator and a bottom insulator were also inserted in the case. As the separator, a composite nonwoven fabric made of vinylon and lyocell produced by KURARAY CO., LTD. was used. Then, 35 wt% of a potassium hydroxide aqueous solution (containing 2 wt% of ZnO) was poured into the separator, and the inside of the separator is filled with the above-described negative electrode. Subsequently, the bottom plate was crimped. In this manner, AA alkaline batteries of Nos. 1 to 4 shown in Table 1 were fabricated. The battery of No. 1 is the battery of this embodiment, and the batteries of Nos. 2 to 4 are batteries of comparative examples.

It will now be described how the batteries were evaluated.

### (a) Low-Temperature Pulse Discharge Test

The battery is subjected to pulse discharge with 1.6 A for 0.1 second in a 0°C atmosphere to measure the minimum value of the closed circuit voltage (CCV). Then, the obtained CCV is subtracted from the open circuit voltage (OCV), thereby obtaining a voltage drop amount ΔV [mV]. The values in Table 1 are average values measured for the five batteries. This test is conducted on the assumption that the batteries are used in digital still cameras. As shown in Table 1, when ΔV is less than 290 mV, the voltage drop amount is small and a superior result, which is indicated by "A," is obtained. When ΔV is larger than or equal to 290 mV and less than 300 mV, no problems arise in practice, which is indicated by "B." When ΔV is larger than or equal to 300 mV, the voltage drop amount is large so that an inferior result, indicated by "C," is obtained.

### (b) Ordinary Gas Generation Test

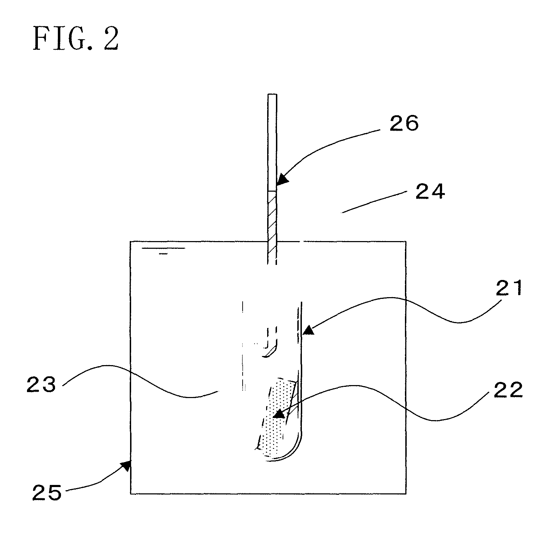

A swaged (curled) portion at the upper edge of the positive electrode case of the battery is opened with nippers, and a negative electrode current collector is taken therefrom. Then, as illustrated in FIG. 2, a battery 22 from which the negative electrode current collector has been taken out is put in a test tube 21. The test tube 21 is filled with liquid paraffin 23, and then is sealed with a silicone rubber plug 24. A pipet 26 is then inserted in the liquid paraffin 23 through the silicone rubber plug 24. Thereafter, the test tube 21 is placed in a constant-temperature bath 25, and is kept at 45°C so as to measure a rate [µL/day] of gas generation from the zinc negative electrode of the battery 22. The values in Table 1 are average values obtained by measurement on the five batteries in one week from the start of the test. The test is intended to measure the rate of gas generation from a battery in a case where the battery is a normal battery in which the negative electrode is contaminated with no impurities and the battery is kept at high temperatures. As shown in Table 1, when the gas generation rate is less than 20 µL/day, no leakage occurs even after the battery has been stored at high temperatures and a superior result is obtained as indicated by "A." When the gas generation rate is higher than or equal to 20 µL/day and less than 30 µL/day, no problems arise in practice, as indicated by "B" as long as the battery is normally used after being stored at high temperatures (i.e., unless the battery is used under severe conditions such as overdischarge). When the gas generation rate is 30 µL/day or higher, the internal pressure of the battery increases when the battery is stored at high temperatures so that leakage is likely to occur, and an inferior result is obtained as indicated by "C." (c) Gas Generation Test under Contamination with Foreign Substance

The battery is opened in the same manner as in test (b), and a single iron micro fiber (Tufmic Fiber® S10C produced by TOKYO ROPE MFG. CO. LTD.) is mixed into the negative electrode. Then, the resultant negative electrode is inserted in the test tube 21, and sealed in the liquid paraffin 23. Subsequently, the test tube 21 is placed in the constant-temperature bath 25, and the battery 22 is kept at 45°C so as to measure a rate [µL/day] of gas generation from each battery. The material S10C is iron micro fiber obtained by "Chatter Machining" with which short fiber is produced by directly machining an iron rod, and has constant size, shape, and weight (where dimensions given by the company are 87 ± 21 µm as the diameter, 2.9 ± 0.4 mm as the length, and 0.08 mg as the weight). The values shown in Table 1 are average values obtained by measurement on the five batteries in one week from the start of the test. The test is intended to measure the rate of gas generation from a battery in a case where the negative electrode is contaminated with iron scraps as an impurity. When the gas generation rate is less than 60 µL/day, no leakage occurs under conditions of normal storage and normal use, and a superior result is obtained as indicated by "A." When the gas generation rate is higher than or equal to 60 µL/day and less than 80 µL/day, no problems arise in practice, as indicated by "B." When the gas generation rate is 80 µL/day or higher, the internal pressure of the battery increases when the battery before being discharged is stored for a long period of time so that leakage is likely to occur, resulting in an inferior result, as indicated by "C." The iron scraps as an impurity are produced from a machine for fabrication, or are produced as burrs on the battery case.

Results of the foregoing three tests conducted on batteries Nos. 1 to 4 are shown in the right section of Table 1. Battery No. 1 of this example exhibits "A," i.e., a superior result, for all the three tests. On the other hand, battery No. 2 to which only the anionic surfactant is added exhibits "B" for test (b), and "C" for tests (a) and (c). Battery No. 3 to which only the cationic surfactant is added exhibits "A" for test (c). However, in battery No. 3, the amount of the voltage drop is excessively large in test (a), and the result for test (b) is C. Battery No. 4 to which no surfactants are added exhibits "A" for test (a), but exhibits much inferior results for tests (b) and (c).

From the foregoing results, the battery to which only the anionic surfactant exhibits an inferior result for test (a), a superior result for test (b), and the same result for test (c), as compared to the battery to which no surfactants are added. The battery to which only the quaternary ammonium salt cationic surfactant is added exhibits a much inferior result for test (a), a slightly superior result for test (b), and a superior result for test (c), as compared to the battery to which no surfactants are added. However, the battery to which both the anionic surfactant and the quaternary ammonium salt cationic surfactant are added exhibits superior results for tests (b) and (c) to the battery to which only one of the two surfactants is added, and exhibits substantially the same result for test (a) as the battery to which no surfactants are added, although the result for test (a) is inferior in the case of adding only one of the two surfactants. This is not conceivable from the results on the batteries to which only one of the two surfactants is added.

### <Example 2>

As described above, the anionic surfactant suppresses ordinary gas generation. This is assumed to be because of the following mechanism. In a normal battery, i.e., a battery including no impurities, hydrogen gas is generated when H₂O accepts electrons from zinc. However, a hydrophilic portion of the anionic surfactant covers the zinc surface, whereas a hydrophobic portion faces outside to suppress entering of H₂O to the zinc surface, thereby suppressing generation of hydrogen gas.

The function of the anionic surfactant will now be described in further detail. In a strong alkaline electrolyte such as an electrolyte in a negative electrode of an alkaline battery, OH⁻ is captured at the metal surface, resulting in that the zinc surface becomes negatively charged, and no electrostatic attraction exists between the (negatively charged) hydrophilic portion of the anionic surfactant and zinc. However, the solubility of the anionic surfactant in the strong alkaline electrolyte is much lower than that in a neutral aqueous solution. Accordingly, part of the anionic surfactant which is not dissolved in the electrolyte is pushed out of the electrolyte, and is located at the interface between the electrolyte and zinc. On the other hand, this anionic surfactant does not prevent a supply of OH⁻ ions to zinc and diffusion of zincate ions, which are necessary to discharge reaction. This is because the sequence of the anionic surfactant is immediately broken because of a change in electric field near the zinc surface during discharge.

In the mechanism described above, the size of the hydrophobic portion of the anionic surfactant is assumed to influence the degree of suppression of the H₂O entering, and also to influence the possibility of breakage in the sequence during discharge. To confirm this assumption, a test was conducted.

Batteries of Example 2 shown in Table 2 were obtained by changing only the type of the anionic surfactant in battery No. 1 of Example 1. The other configuration and composition of the batteries of Example 2 were the same as those of battery No. 1. The alkyl group used in the anionic surfactant of this example is an alkyl group of a normal chain.

**[Table 2]**

| No. | Anionic Surfactant | (a) [mV] | (b) [µL/day] | (c) [µL/day] |
|---|---|---|---|---|
| 5 | C₄H₉-O-PO₃K₂ | 278 A | 28 B | 45 A |
| 6 | C₄H₉-O-SO₃Na | 280 A | 26 B | 45 A |
| 7 | C₄H₉-SO₃Na | 281 A | 29 B | 40 A |
| 8 | C₅H₁₁-O-PO₃K₂ | 281 A | 15 A | 40 A |
| 9 | C₅H₁₁-O-SO₃Na | 277 A | 14 A | 45 A |
| 10 | C₅H₁₁-SO₃Na | 273 A | 16 A | 45 A |
| 11 | C₁₂H₂₅-O-PO₃K₂ | 272 A | 16 A | 40 A |
| 12 | C₁₂H₂₅-O-SO₃Na | 271 A | 13 A | 40 A |
| 13 | C₁₂H₂₅-SO₃Na | 273 A | 15 A | 35 A |
| 14 | C₁₈H₃₇-O-PO₃K₂ | 275 A | 15 A | 45 A |
| 15 | C₁₈H₃₇-O-SO₃Na | 277 A | 17 A | 40 A |
| 16 | C₁₈H₃₇-SO₃Na | 279 A | 16 A | 40 A |
| 17 | C₁₉H₃₉-O-PO₃K₂ | 291 B | 15 A | 35 A |
| 18 | C₁₉H₃₉-O-SO₃Na | 298 B | 16 A | 40 A |
| 19 | C₁₉H₃₉-SO₃Na | 294 B | 16 A | 45 A |

When the carbon number of the alkyl group is four, the result for test (b) was "B," and no problems arose in practice. However, it is still preferable to use an anionic surfactant containing an alkyl group whose carbon number is five or more, which exhibits "A" for test (b). This is considered to be because when the carbon number is four or less, a hydrophobic group becomes small to relatively degrade its performance of preventing H₂O from entering the zinc surface.

On the other hand, when the carbon number of the alkyl group is 19, the result for test (a) was "B." This case poses no problems in practice, either. However, it is still preferable to use an anionic surfactant containing an alkyl group whose carbon number is 18 or less, which exhibits "A" for test (a). This is considered to be because the amount of molecules in the anionic surfactant increases, the intermolecular force increases to cause the diffusion rate in a solution to decrease, resulting in that the sequence is not likely to be broken during discharge.

### <Example 3>

As described above, the quaternary ammonium salt cationic surfactant suppresses generation of hydrogen gas when a battery is contaminated with iron as an impurity. It is assumed that this is because of the following mechanism. In a strong alkaline electrolyte, OH⁻ is captured at the metal surface so that the surface is negatively charged. Accordingly, a cation portion of the quaternary ammonium salt cationic surfactant is strongly attracted to the metal surface by electrostatic attraction, thereby forming a coating. In an alkaline solution, iron is more strongly negatively charged than zinc, and thus, a coating of the quaternary ammonium salt cationic surfactant is selectively formed on iron to prevent water molecules from approaching iron, thus suppressing generation of hydrogen gas due to decomposition of water molecules.

In the foregoing mechanism, the size of the quaternary ammonium salt cationic surfactant is assumed to influence the degree of preventing water molecules from approaching iron. To confirm this assumption, a test was conducted.

The batteries of Example 3 shown in Table 3 were obtained by changing only the type of the quaternary ammonium salt cationic surfactant in battery No. 1 of Example 1. The other configuration and composition of the batteries of Example 3 were the same as those of battery No. 1.

**[Table 3]**

| No. | Cationic Surfactant | (a) [mV] | (b) [µL/day] | (c) [µL/day] |
|---|---|---|---|---|
| 20 | (CH₃)₄-N·OH | 280 A | 15 A | 75 B |
| 21 | (C₂H₅)₃CH₃-N·Cl | 278 A | 14 A | 45 A |
| 22 | (C₃H₇)₄-N·OH | 277 A | 14 A | 45 A |
| 23 | (C₄H₉)₄-N·OH | 297 B | 16 A | 50 A |

In a case where cation is tetramethylammonium salt, the result for test (c) was "B," and no problems arise in practice. However, it is preferable to use surfactants in which cation is tetraethylammonium salt (No.1), triethylmethylammonium salt (No.21), and tetrapropyl ammonium salt (No.22), all of which exhibit "A" for test (c). In a case where cation is tetrabutylammonium salt (No. 23), the result for test (c) is "A," whereas the result for test (a) is "B." However, in practice, this case poses no problems arise.

### <Example 4>

Then, a study was conducted on the amounts of the added anionic surfactant and the added quaternary ammonium salt cationic surfactant.

Batteries Nos. 24 to 28 of Example 4 shown in Table 4 were obtained by changing only the amount of the added anionic surfactant in battery No. 1 of Example 1. Batteries Nos. 29 to 33 were obtained by changing only the amount of the added quaternary ammonium salt cationic surfactant in battery No. 1 of Example 1. The other configuration and composition of the batteries of Example 4 were the same as those of battery No. 1.

**[Table 4]**

| No. | Anionic Surfactant (weight part) | Cationic Surfactant (weight part) | (a) [mV] | (b) [µL/day] | (c) [µL/day] |
|---|---|---|---|---|---|
| 24 | 0.005 | 0.005 | 280 A | 28 B | 50 A |
| 25 | 0.01 | 0.005 | 279 A | 17 A | 45 A |
| 26 | 0.1 | 0.005 | 278 A | 15 A | 50 A |
| 27 | 0.5 | 0.005 | 285 A | 14 A | 45 A |
| 28 | 0.6 | 0.005 | 296 B | 14 A | 45 A |
| 29 | 0.05 | 0.001 | 278 A | 16 A | 75 B |
| 30 | 0.05 | 0.002 | 278 A | 15 A | 50 A |
| 31 | 0.05 | 0.01 | 280 A | 14 A | 45 A |
| 32 | 0.05 | 0.02 | 284 A | 13 A | 40 A |
| 33 | 0.05 | 0.03 | 299 B | 14 A | 40 A |

When the amount of the added anionic surfactant is less than 0.01 weight part (i.e., No. 24), no problems arise in practice, but the result for test (b) is "B." When the amount is larger than 0.5 weight part (i.e., No. 28), no problems arise in practice, but the result for test (a) is "B." Accordingly, the amount of the added anionic surfactant is preferably in the range from 0.01 wt% to 0.5 wt%, both inclusive, of the zinc alloy.

When the amount of the added quaternary ammonium salt cationic surfactant is less than 0.002 weight part (i.e., No. 29), no problems arise in practice, but the result for test (c) is "B." When the amount is larger than 0.02 weight part (i.e., No. 33), no problems arise in practice, but the result for test (a) is "B." Accordingly, the amount of the added quaternary ammonium salt cationic surfactant is preferably in the range from 0.002 wt% to 0.02 wt%, both inclusive, of the zinc alloy.

### <Example 5>

Then, a study was conducted on the amount of the added indium hydroxide. The addition of an indium compound to a gelled alkaline electrolyte can suppress gas generation in both of a case where the battery is contaminated with an impurity and a case where the battery is not contaminated with an impurity.

Batteries of Example 5 shown in Table 5 were obtained by changing only the amount of the added indium hydroxide in battery No. 1 of Example 1. The other configuration and composition of the batteries of Example 3 were the same as those of battery No. 1.

**[Table 5]**

| No. | In(OH)₃ (weight part) | Indium amount (weight part) | (a) [mV] | (b) [µL/day] | (c) [µL/day] |
|---|---|---|---|---|---|
| 34 | 0 | 0 | 282 A | 26 B | 75 B |
| 35 | 0.003 | 0.002 | 280 A | 18 A | 65 B |
| 36 | 0.005 | 0.003 | 278 A | 16 A | 45 A |
| 37 | 0.02 | 0.013 | 279 A | 15 A | 40 A |
| 38 | 0.05 | 0.033 | 280 A | 15 A | 40 A |

When the amount of the metal indium in the indium hydroxide is smaller than 0.003 weight part (i.e., Nos. 34 and 35), no problems arise in practice, but the result for test (c) is "B." When the metal indium is not added at all, no problems arise in practice, but the result for test (b) is "B." Accordingly, the amount of indium in the indium hydroxide is preferably 0.003 wt% or more of the amount of the zinc alloy. In terms of cost, the amount of indium in the indium hydroxide is preferably 0.033 wt% or less of the zinc alloy.

### <Example 6>

Then, three tests were conducted on battery No. 1 of Example 1 after 3-month storage under conditions shown in Table 6 in consideration of distribution in the market. Similar tests were also conducted on AA alkaline batteries produced by various companies and available on the market.

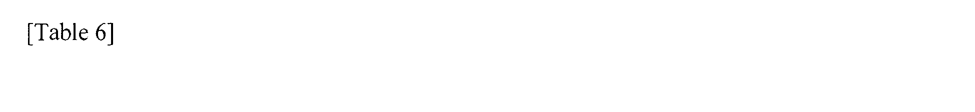

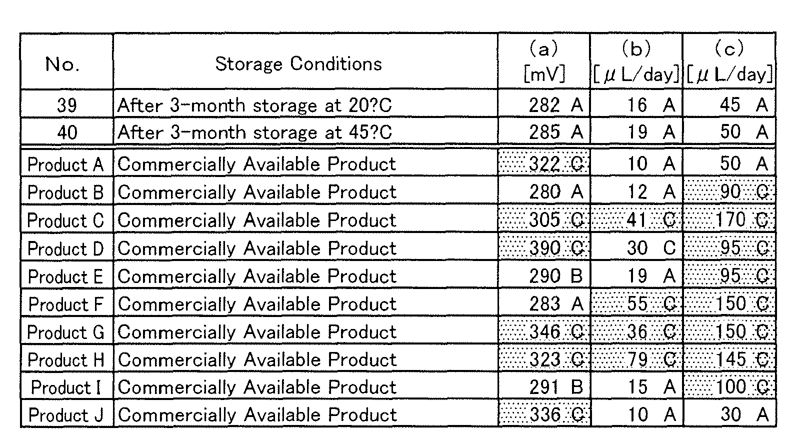

After each of storage for three months at 20°C and storage for three months at 45°C, battery No. 1 exhibited "A" for the three tests to show that characteristics of battery No. 1 were maintained. On the other hand, each of the commercially available alkaline batteries exhibited at least one "C" for the three tests.

### <Other Examples>

In the foregoing examples, the anionic surfactant is made of potassium alkyl phosphate, sodium alkyl sulfate, or sodium alkanesulfonate. However, the anionic surfactant is not limited to these materials. Alternatively, counter cation may be any of H, K, and Na, such as ROSO₃K, ROPO₃Na₂, and RSO₃H. Two types of counter cation may be used in alkyl phosphate. The alkyl group R may be an alkyl group of a branched chain (e.g., an iso-alkyl group) except for a normal chain. An additive to the negative electrode is preferably an anionic surfactant of alkyl phosphate, alkyl sulfate, or alkanesulfonate because these materials are stable in a concentrated alkaline electrolyte.

The indium compound added to the gelled alkaline electrolyte is not limited to indium hydroxide. For example, In₂O₃ may be used.

The size and alloy composition of the zinc alloy particles are not limited to those described in the foregoing examples.

### INDUSTRIAL APPLICABILITY

As described above, a mercury-free alkaline battery according to the present invention can suppress both gas generation and a voltage drop after pulse discharge at low temperatures, and thus, is useful for application to, for example, digital still cameras.

## Claims

1. A mercury-free alkaline battery, comprising:
a positive electrode;
a negative electrode; and
a separator, wherein
the negative electrode includes a zinc alloy, as a negative electrode active material, and a gelled alkaline electrolyte, as dispersion medium, and also includes an anionic surfactant and a quaternary ammonium salt cationic surfactant.

2. The mercury-free alkaline battery of claim 1, wherein the anionic surfactant is made of at least one material selected from the group consisting of ROPO₃X₂, ROSO₃X, and RSO₃X (where R is an alkyl group having a carbon number from 5 to 18, both inclusive, and X is at least one material selected from the group consisting of H, Na, and K), and
an amount of the anionic surfactant contained in the negative electrode is in the range from 0.01 wt% to 0.5 wt%, both inclusive, of the zinc alloy.

3. The mercury-free alkaline battery of claim 1 or 2, wherein the quaternary ammonium salt cationic surfactant is made of at least one material selected from the group consisting of tetraethylammonium salt, tetrapropyl ammonium salt, and triethylmethylammonium salt, and
an amount of the quaternary ammonium salt cationic surfactant contained in the negative electrode is in the range from 0.002 wt% to 0.02 wt%, both inclusive, of the zinc alloy.

4. The mercury-free alkaline battery of one of claims 1 to 3, wherein the gelled alkaline electrolyte in the negative electrode further includes an indium compound in which an amount of indium is in the range from 0.003 wt% to 0.033 wt%, both inclusive, of the zinc alloy.

5. The mercury-free alkaline battery of one of claims 1 to 4, wherein the mercury-free alkaline battery is an AA battery,
an amount ΔV of a voltage drop obtained by subtracting, from an open circuit voltage, a closed circuit voltage after pulse discharge performed with 1.6 A for 0.1 second in a 0°C atmosphere, is less than 300 mV, and
in an atmosphere at 45°C, a rate of gas generation from the negative electrode is less than 30 µL/day, and is less than 80 µL/day when 0.08 mg of iron micro fiber is mixed in the negative electrode.
